# EUROPÄISCHE PATENTSCHRIFT

(11) **EP 1 040 758 B1**
(45) Veröffentlichungstag und Bekanntmachung des Hinweises auf die Patenterteilung: **25.09.2002**
(21) Anmeldenummer: 00106241.3
(22) Anmeldetag: 22.03.2000
(51) Int. Cl.: A22C 11/08, F04C 13/00

(54) **Fördervorrichtung für pastöse Massen und Verfahren zur Bestimmung deren Luftinhaltes**
Device for transporting pasty material and method for detecting the air quantity
Dispositif de transport pour matières pâteuses et procédé pour déterminer la quantité d'air

(30) Priorität: 30.03.1999 DE 19914499
(43) Veröffentlichungstag der Anmeldung: 04.10.2000
(73) Patentinhaber: Albert Handtmann Maschinenfabrik GmbH & Co. KG, 88400 Biberach (DE)
(72) Erfinder: Staudenrausch, Martin, 88400 Biberach (DE); Schrader, Wolfgang, 88400 Biberach (DE)
(74) Vertreter: Grünecker, Kinkeldey, Stockmair & Schwanhäusser Anwaltssozietät

(56) Entgegenhaltungen:
- EP-A- 0 718 497
- EP-A- 0 875 677
- EP-A- 0 898 893
- US-A- 4 622 717
- US-A- 5 069 608

## Beschreibung

Die Erfindung betrifft eine Fördervorrichtung für pastöse Massen, insbesondere von Wurstbrät, mit den Merkmalen des Oberbegriffs des Anspruchs 1 und ein Verfahren zur Bestimmung der Kompressionsfähigkeit einer pastösen Masse in einer solchen Fördervorrichtung.

Es ist bekannt, zum möglichst genauen Portionieren von Wurstbrät, welches einen mehr oder weniger großen Luftanteil enthält, ein Verfahren anzuwenden, bei dem das lufthaltige Brät mittels einer Zuführpumpe einem Dosiersystem unter einem Druck zugeführt wird, der den Luftinhalt im Brät auf einen Bruchteil des Normaldruckvolumens komprimiert. Dadurch wird mit Hilfe des Dosiersystems Brät mit minimalen Hohlräumen verarbeitet, so dass eine hohe Gewichtsgenauigkeit erreicht wird.

Derartige Fördervorrichtungen können z.B. Hubkolbeneinrichtungen umfassen, in denen das Brät durch einen Hubkolben komprimiert wird, bevor es zur Weiterverarbeitung ausgestoßen wird. Vielfach finden aber auch sogen. Flügelzellenpumpen Einsatz, wie sie z.B. in DE 42 27 621 A1 oder EP 0718 497 A1 beschrieben sind. Den bekannten Vorrichtungen ist gemeinsam, dass eine volumenveränderliche Kammer zur Komprimierung des Wurstbrätes und ein Einlass und ein Auslass für das Wurstbrät vorhanden sind. Aus der US 4 622 717 ist ebenfalls bereits eine Portioniervorrichtung für pastöse Masse bekannt.

Der Luftgehalt des Wurstbräts hat Einfluss auf das Gewicht, so dass Änderungen des Luftgehaltes die Gewichtsfestlegung des verarbeiteten Wurstbräts für eine Wurst unpräzise machen. Der Luftinhalt ist außerdem entscheidend für die Haltbarkeit, das Schnittbild und Biss des Fertigproduktes.

Aufgabe der vorliegenden Erfindung ist es ausgehend von obigem Stand der Technik, eine Fördervorrichtung und ein Verfahren anzugeben, mit der/dem der Luftinhalt der pastösen Masse überwacht werden kann.

Diese Aufgabe wird durch eine gattungsgemäße Fördervorrichtung mit den Merkmalen des kennzeichnenden Teils des Anspruchs 1 und ein Verfahren mit den Merkmalen des Anspruchs 15 gelöst.

Die erfindungsgemäße Fördervorrichtung umfasst eine Einrichtung zur Erfassung des Druckes in der zu komprimierenden pastösen Masse und eine Einrichtung zur Erfassung der Volumenänderung der volumenveränderlichen Kammer.

Mit Hilfe der erfindungsgemäßen Vorrichtung kann während des Komprimierungsvorganges der pastösen Masse, z.B. des Wurstbräts, dessen Druck erfasst werden. Gleichzeitig ist während des Fördervorganges die Volumenänderung der volumenveränderlichen Kammer, in der sich die pastöse Masse befindet, möglich. In einer solchen volumenveränderlichen Kammer befindet sich z.B. jeweils das Material, das zu einer Einheit, z.B. einer Wurst, weiterverarbeitet werden soll. Aus den bestimmten Werten lässt sich eine Beziehung zwischen der Druckänderung und der Volumenänderung herstellen und so die Kompressionsfähigkeit bestimmen. Je nach ursprünglichem Luftinhalt der pastösen Masse wird z.B. eine vorbestimmte Volumenänderung eine andere Druckänderung hervorrufen. Auf diese Weise läßt sich der urprüngliche Luftinhalt der zugeführten pastösen Masse überwachen. Da mit der erfindungsgemäßen Vorrichtung die Überwachung des Luftinhaltes während des Fördervorganges möglich ist, ist eine ständige und kontinuierliche Qualitätsüberwachung des Produktes, z.B. des Wurstbrätes möglich.

Ändert sich nun während des Abfüllens mehrerer Einheiten, z.B. Würste, der Luftinhalt der zugeführten Masse, was sich an einer Veränderung der Beziehung zwischen Volumen- und Druckänderung ablesen läßt, so kann auf eine Änderung der Beschaffenheit des zu verarbeitenden Materiales geschlossen werden. Bei der Wurstherstellung ist z.B., wie dargelegt, der Luftinhalt entscheidend für die Haltbarkeit, das Schnittbild und den Biss des späteren Produktes. Eine entsprechende Änderung des Luftinhaltes, die mit der erfindungsgemäßen Fördervorrichtung detektiert werden kann, macht einen sofortigen Eingriff des Bedienungspersonales möglich, um die Ursache der Veränderung festzustellen.

Ebenso ist es denkbar, dass der Luftinhalt mit Hilfe einer entsprechenden Aufzeichnungsvorrichtung aufgezeichnet wird, um ein Protokoll über die Beschaffenheit des verarbeiteten Gutes zu haben.

Auch kann bei einer Änderung des Luftinhaltes eine Gewichtskorrektur vorgenommen werden, um den veränderten Luftinhalt auszugleichen und so die Präzision der Gewichtsbestimmung zu gewährleisten.

Schließlich zeigt die erfindungsgemäße Fördervorrichtung auch einen Fehler der Fördervorrichtung an, z.B. eine Verstopfung oder fehlendes zu komprimierendes Material. Bei solchen Fehlem ergibt sich automatisch eine Veränderung der Beziehung zwischen Volumenund Druckänderung, wenn die volumenveränderliche Kammer nicht ausreichend oder gar nicht mit pastöser Masse versorgt wird.

Die erfindungsgemäße Fördervorrichtung kann z.B. eine Hubkolbeneinrichtung oder eine Flügelzellenpumpe umfassen.

Im Falle einer Hubkolbeneinrichtung, bei welcher die Volumenveränderung der volumenveränderlichen Kammer z.B. durch Verschiebung eines Kolbens erreicht wird, wird vorteilhafterweise die Einrichtung zur Erfassung der Volumenveränderung ein Mittel zur Erfassung der Kolbenstellung umfassen. Bei bekannter Dimension des Hubraumes kann aus der Kolbenstellung die Volumenveränderung bestimmt werden.

Im Falle einer Flügelzellenpumpe wird die pastöse Masse in Flügelzellen befördert. Eine Flügelzellenpumpe umfasst ein Pumpengehäuse und einen darin angeordneten in Drehung versetzbaren Rotor mit in diesem radial verschiebbaren Flügeln, die mit der Wandung des Pumpengehäuses, dem Boden und dem Deckel des Gehäuses und der Außenfläche des Rotors die Flügelzellen bilden. Die volumenveränderliche Kammer wird vorteilhafterweise durch eine Flügelzelle gebildet, die sich in einer Kompressionszone der Flügelzellenpumpe befindet. Eine solche Kompressionszone kann in einer Flügelzellenpumpe erreicht werden, indem eine Wandung des Pumpengehäuses einen nicht konstanten Abstand von der Rotorachse aufweist, so dass sich bei Drehung des Rotors das Volumen der Flügelzelle in der Kompressionszone verändert. Vorteilhafterweise umfasst dabei die Einrichtung zur Erfassung dieser Volumenveränderung ein Mittel zur Bestimmung der Flügelstellung der jeweils sich in der Kompressionszone befindlichen Flügelzelle. Bei bekannter Änderung des Abstandes einer Wandung des Pumpengehäuses von der Rotorachse kann aus der Lage der Flügelzelle der aktuelle Volumeninhalt einer Kammer bestimmt werden.

Die Einrichtung zur Erfassung des Druckes in der zu komprimierenden Masse kann ein Drucksensor sein, der in der Kompressionszone mit der zu fördernden pastösen Masse in Kontakt kommt und mit dessen Hilfe kontinuierlich der Druck aufgezeichnet wird. Eine solche kontinuierliche Aufzeichnung ermöglicht ein Nachverfolgen des Komprimierungsvorganges während des Fördems der pastösen Masse.

In einfacher Ausgestaltung kann die Einrichtung zur Erfassung des Druckes einen Überdrucksensor umfassen, der immer bei einem festgelegten und vorbestimmten Druckwert anspricht. Beim Ansprechen des Überdrucksensors kann mit Hilfe der Einrichtung zur Erfassung der Volumenveränderung gleichzeitig die bis zu diesem Zeitpunkt eingetretene Volumenveränderung in der Kompressionszone bestimmt werden. Aus dem Druckwert, bei welchem der Überdrucksensor anspricht, und der bis zum Ansprechen des Überdrucksensors eingetretenen Volumenveränderung in der Kompressionszone lässt sich die Kompressionsfähigkeit der pastösen Masse bestimmen.

Der Überdrucksensor kann ein konventioneller Überdrucksensor sein, z.B. eine federbeaufschlagte Membraneinrichtung. In besonders vorteilhafter Ausführung wird jedoch ein Ausgleichszylinder als Überdrucksensor eingesetzt, in dem ein federbeaufschlagter Ausgleichskolben gelagert ist. Ein solcher Ausgleichskolben gewährleistet, dass das Wurstbrät durch eine zu hohe Kompression keinen Schaden nimmt. Der Ausgleichszylinder kann zusätzlich mit einer Überdruckleitung verbunden sein, die mit dem Einlass in die Fördervorrichtung verbunden ist, so dass überschüssiges pastöses Material zurückgeführt wird.

Die Druckänderung und die Volumenveränderung kann auf einer Anzeigevorrichtung angezeigt werden. Vorteilhafterweise umfasst die Fördervorrichtung jedoch Mittel zur Bestimmung des ursprünglichen Luftinhaltes der pastösen Masse aus diesen Werten und zeigt den Luftinhaltswert direkt an. Es können dazu z.B entsprechende Vergleichsdaten herangezogen werden, die im Vorhinein bestimmt wurden und die Beziehung zwischen ursprünglichem Luftinhalt und der Änderung des Druckes in Abhängigkeit der Änderung des Volumens zum Inhalt haben.

Das erfindungsgemäße Verfahren zur Bestimmung des Luftinhaltes einer pastösen Masse wird in einer Fördervorrichtung für pastöse Massen eingesetzt, die eine Kompressionszone umfasst, wobei der Druck und die Volumenänderung in der Kompressionszone erfasst werden und der Luftinhalt daraus bestimmt wird.

Bei einer einfachen Ausgestaltung wird dabei das Volumen der pastösen Masse zu einem Zeitpunkt bestimmt, an welchem ein Überdrucksensor anspricht, der auf einen vorbestimmten Druckwert eingestellt ist und mit der Kompressionszone in Verbindung ist. Aus dem so bestimmten Volumen und dem bekannten Normaldruckvolumen wird die Volumenänderung der pastösen Masse bestimmt und aus dem vorbestimmten Druckwert, bei welchem der Überdrucksensor anspricht, und der Volumenänderung der Luftinhalt der pastösen Masse.

Die vorliegende Erfindung soll anhand der nachfolgenden Zeichnungen näher erläutert werden. Dabei zeigen
- Figur 1: eine Querschnittsansicht von oben auf eine erfindungsgemäße Fördereinrichtung, die eine Flügelzellenpumpe umfaßt,
- Figur 2: eine schematische Detailseitenansicht einer erfindungsgemäßen Flügelzellenpumpe,
- Figuren 3a-e: Momentaufnahmen des Fortgangs einer Flügelzelle in der Flügelzellenpumpe der Figur 1, wobei der jeweils untere Teil der Figur eine Querschnittsansicht von oben auf eine erfindungsgemäße Flügelzellenpumpe zeigt und der jeweils obere Teil der Figur eine Schnittansicht entlang der gestrichelten Linie D-D in Blickrichtung radial nach außen zeigt,
- Figur 4: eine Momentaufnahme einer anderen Ausführungsform einer erfindungsgemäßen Fördereinrichtung mit einer Flügelzellenpumpe in der Darstellungsweise der Figur 3,
- Figur 5: den Zusammenhang des Kammervolumens und des gemessenen Winkels eines Flügels einer Flügelzelle der Flügelzellenpumpe der Figur 1 und
- Figur 6: ein Beispiel des Zusammenhanges zwischen dem Luftanteil der pastösen Masse und dem Volumen, das bis zur Erreichung eines vorbestimmten Druckwertes gefördert worden ist.

Das erfindungsgemäße Verfahren und die erfindungsgemäße Vorrichtung werden an einer Ausführungsform geschildert, die eine Flügelzellenpumpe umfasst, wie sie z.B. in DE 42 27 621 A1 oder EP 0718 497 A1 beschrieben ist Die im folgenden beschriebene Ausführungsform kann zum Fördern verschiedener pastöser Massen eingesetzt werden. Im folgenden wird die Anwendung bei der Herstellung von Würsten beschrieben, bei dem die pastöse Masse durch das Wurstbrät gebildet wird.

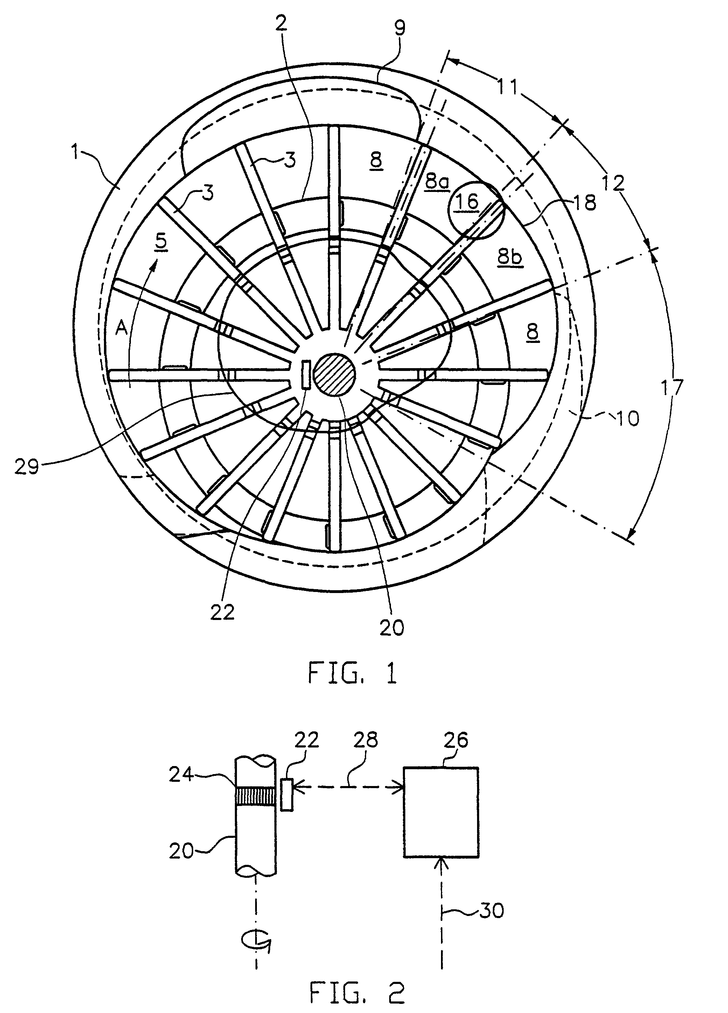

Wie in Figur 1 ersichtlich, besteht die Flügelzellenpumpe aus einem Pumpengehäuse 1 und einem darin exzentrisch angeordneten, in Drehung versetzbaren Rotor mit einer Pumpenwelle 20. In dem Rotor sind radial verschiebbar gelagerte Flügel 3 angeordnet, die mit der Wandung 18 des Pumpengehäuses 1, dem Boden 5 und dem Deckel 6 des Gehäuses und der Außenfläche 2 des Rotors Förderzellen 8 bilden und in abdichtendem Sinn zusammenwirken, wobei das Pumpengehäuse 1 einen Bräteinlass 9 und einen Brätauslass 10 aufweist, zwischen denen ein Kompressionssektor 11 und ein Dosiersektor 12 verwirklicht ist.

In dem Kompressionssektor 11 verändert bei dieser Ausführungsform die Innenwand 18 ihren Abstand zur Pumpenwelle 20, so dass sich bei Drehung des Rotors um die Pumpenwelle 20 in Richtung A die im Kompressionsraum gemessene Länge der Flügel 3 verkürzt, weil die Flügel auf der Kompressionsraumseite in Richtung zur Welle 20 hin verschoben werden. Dies spiegelt der Verlauf der Linie 29 in diesem Bereich wieder.

Bewegt sich der Rotor um die Pumpenwelle 20 in Drehrichtung A wird also im Kompressionssektor 11 das Volumen der Kammer 8a verkleinert.

Im Dosiersektor 12 bleibt das Kammervolumen 8b bei Drehung des Rotors um die Welle 20 konstant, so dass ein definiertes Dosiervolumen entsteht. Im Ausstoßsektor 17 befindet sich die jeweilige Flügelzelle mit einem Auslass 10 in Verbindung, durch den die pastöse Masse ausgestoßen wird.

Bei Anwendung in der Wurstherstellung wird der Inhalt einer Kammer 8b durch den Auslass 10 ausgestoßen und zur Herstellung einer Wurst verwendet.

An der Pumpenwelle 20 befindet sich ein Resolver 22, mit dessen Hilfe die Drehung der Pumpenwelle und somit des Rotors erfasst werden kann. Der Resolver kann eine optische Aufnahmeeinheit sein, die das Fortschreiten einer Strichmarkierung 24 auf der Pumpenwelle 20 nachweist, wie es in Figur 2 schematisch dargestellt ist. Bei anderen Ausführungsformen wird die Drehung der Pumpenwelle 20 direkt in dem Antriebsmotor nachgewiesen oder mechanisch abgegriffen und so detektiert. Die Steuerung 26 ist über eine Signalleitung 28 mit dem Resolver 22 verbunden und über eine Signalleitung 30 mit dem Drucksignalaufnehmer 32, bzw. einem Drucksensor 31, die weiter unten näher erläutert werden. Die Steuerung 26 berechnet aus den erhaltenen Signalen die Kompressibilität bzw. den ursprünglichen Luftinhalt des Wurstbräts.

Am Ende der Kompressionszone 11 befindet sich im Deckel bei der gezeigten Ausführungsform ein Ausgleichszylinder 16. Dieser Ausgleichszylinder spricht auf einen voreingestellten Druckwert an, der sich in der darunter befindlichen Flügelzelle aufgebaut hat.

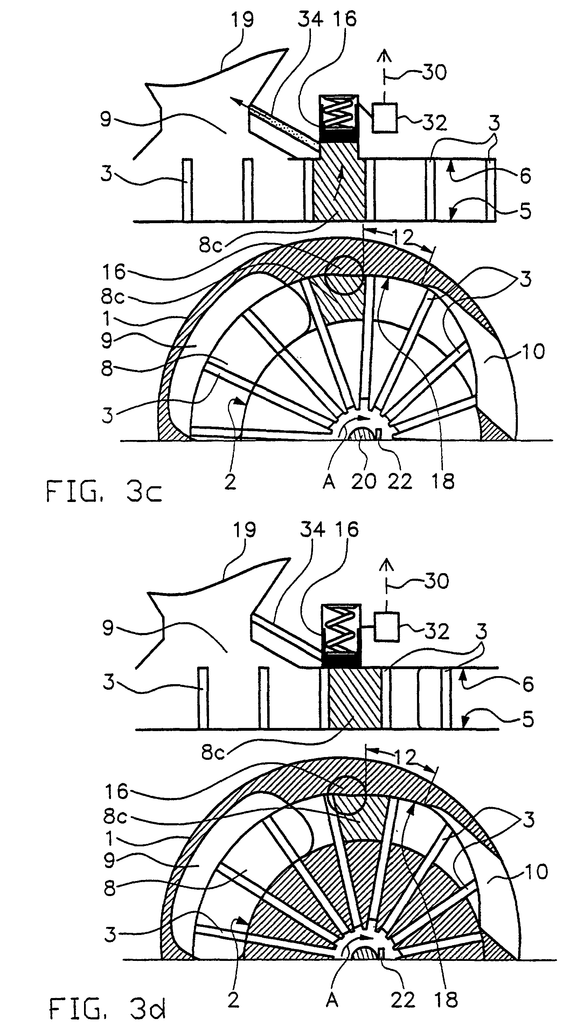

Wie es in den Figuren 3a bis 3e besser zu erkennen ist, ist der Ausgleichskolben federbeaufschlagt. Die Figuren 3a bis 3e zeigen einzelne Momentaufnahmen der erfindungsgemäßen Flügelzellenpumpe. Während die jeweils unteren Figuren eine geschnittene Draufsicht der Flügelzellenpumpe entsprechend der Figur 1 zeigen, zeigt der jeweils obere Teil der Figuren eine Ansicht entlang der Linie D-D, radial nach außen betrachtet.

Der Einlass 9 ist mit einem Einfülltrichter 19 verbunden, durch den das Wurstbrät in die Flügelzellenpumpe eingebracht wird. Der Ausgleichzylinder 16 ist mit einem Drucksignalaufnehmer verbunden, der auf optische oder mechanische Weise nachweist, wenn der Ausgleichszylinder anspricht. 34 bezeichnet einen Rückstromkanal, durch den überschüssiges Wurstbrätmaterial am Ende der Kompressionszone in den Einlass 9 zurückgeführt werden kann, um in darauf folgende Flügelzellen 8 eingespeist werden zu können.

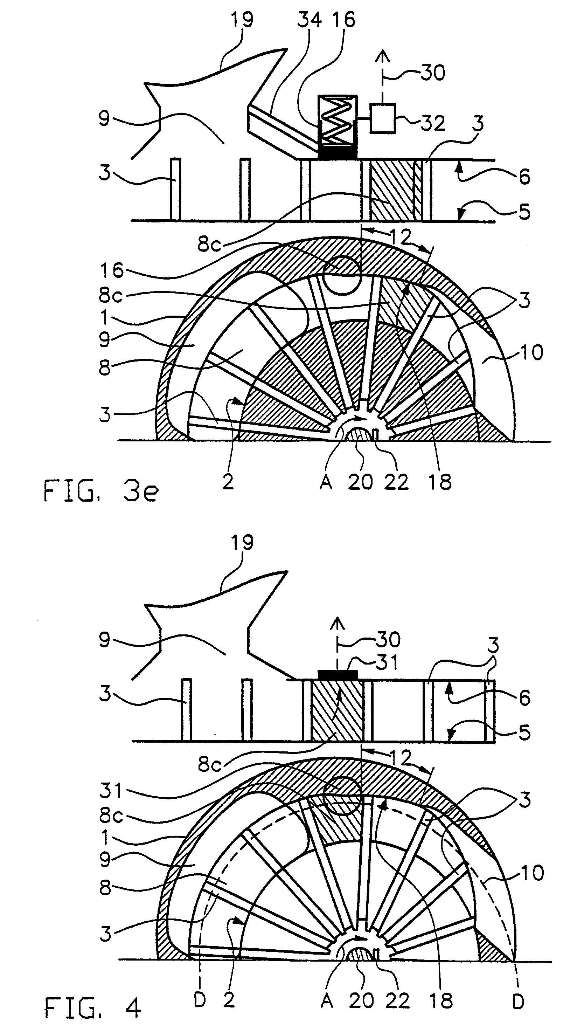

Die Figuren 3a bis 3e verfolgen den Weg einer gefüllten Flügelzelle 8c vom Einbringen des Wurstbräts in Figur 3a bis zum Beginn des Ausstoßes in Figur 3e.

Figur 4 zeigt eine andere Ausführungsform, wobei die Bezugszeichen weitgehend beibehalten wurden. Der Ausgleichszylinder 16 ist durch einen Drucksensor 31 ersetzt, der in der Kompressionszone mit dem Volumen der Flügelzelle in Verbindung steht. Der Drucksensor 31 kann ein kontinuierlich arbeitendes Druckmessgerät sein, z.B. ein Membranmessgerät oder aber ein Überdrucksensor, der ab einem bestimmten herrschenden Druck ein Signal über die Signalleitung 30 an die Steuerung 26 gibt.

Im Folgenden wird die Funktionsweise der erfindungsgemäßen Fördervorrichtung und des erfindungsgemäßen Verfahrens am Beispiel einer Flügelzellenpumpe im Einsatz bei der Wurstherstellung geschildert.

Bei der Wurstherstellung wird die Flügelzellenpumpe dazu eingesetzt, ein definiertes Volumen an Wurstbrät zu erzeugen, das eine Wurstportion bilden soll.

Dazu wird das Wurstbrät durch den Fülltrichter 19 in den Einlass 9 eingefüllt. Das Wurstbrät gerät dann in eine Flügelzelle 8, die sich um die Pumpenwelle 20 drehend antrieben wird. Diese erste Phase des Portioniervorganges ist in Figur 3a dargestellt.

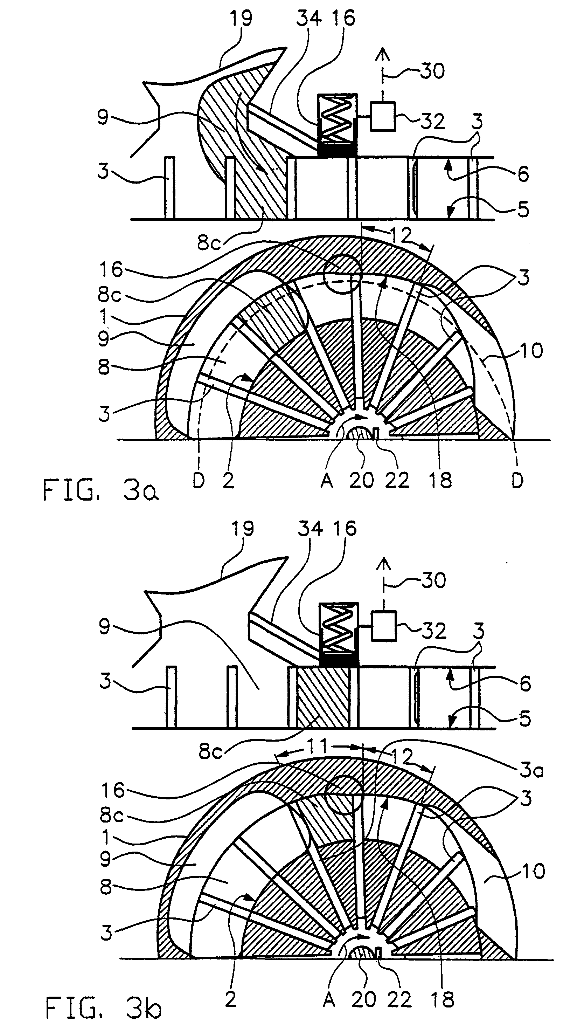

Die so gefüllte Flügelzelle 18 verlässt den Einlassbereich und erreicht, wie es in Figur 3b gezeigt ist, die Kompressionszone 11. Durch die Veränderung des Abstandes der Innenwandkontur 18 des Pumpengehäuses 1 von der Pumpenwelle 20 verändert sich das Volumen der betrachteten Flügelzelle 8c, so dass das darin befindliche Wurstbrät komprimiert wird. Diese Volumenänderung bewirkt zum einen eine Veränderung des Luftgehaltes und zum anderen eine Erhöhung des Druckes. Ab einem bestimmten voreingestellten Druckwert spricht der in einer Art eines Überdruckventil arbeitende Ausgleichskolben 16 an und öffnet die Flügelzelle 8c in der Kompressionszone 11. Dieser Zustand ist in Figur 3c dargestellt. Überschüssiges Wurstbrätmaterial wird durch den Rückstromkanal 34 wieder dem Fülltrichter 19 bzw. dem Einlass 9 zugeführt. Das Ansprechen des Ausgleichskolbens 16 wird von dem Druckaufnehmer 32 registriert und über eine Signalleitung 30 an die Steuerung 26 weitergegeben. Die Steuerung 26 nimmt zu diesem Zeitpunkt einen Messwert des Resolvers 22 auf, der z.B. auf optischem Wege die Drehung der Pumpenwelle 20 nachweist. Auf diese Weise kann die Steuerung 26 die Stellung der Pumpenwelle und damit eines Flügels der Flügelzelle in der Kompressionszone 11 zu dem Zeitpunkt bestimmen, an welchem ein vorbestimmter Druckwert, der zum Öffnen des Ausgleichskolbens 16 ausreicht, erreicht ist.

Auf diese Weise wird die Druckänderung von Normaldruck auf den vorbestimmten Druckwert bestimmt. Aus dem Winkel, um den sich die Pumpenwelle 20 gedreht hat, bis der Ausgleichskolben angesprochen hat, lässt sich die Änderung des Kammervolumens in der Kompressionszone bestimmen.

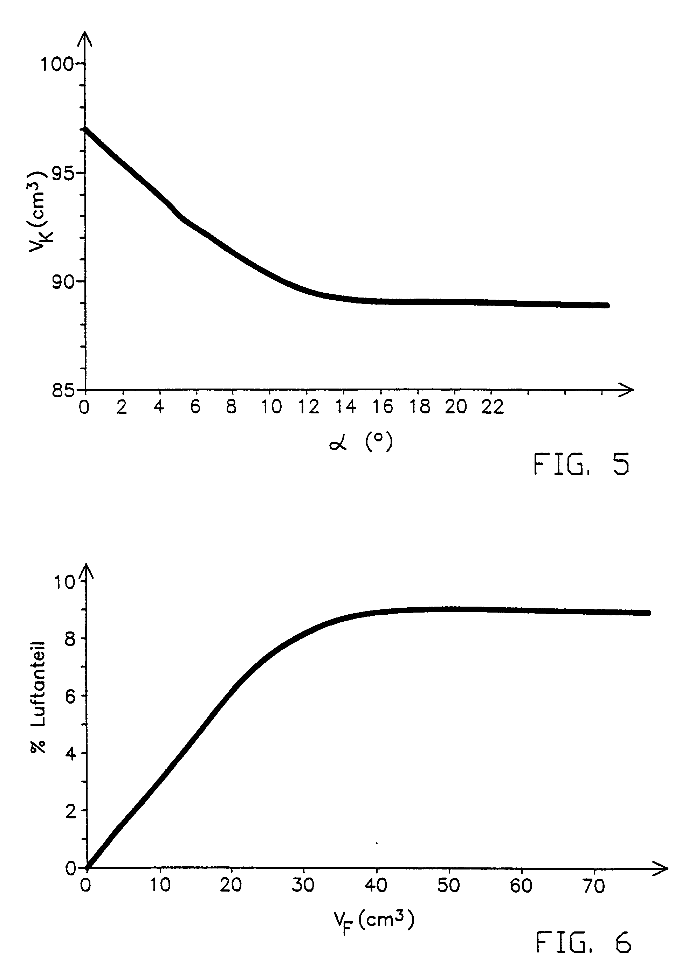

Hierzu dient z.B. ein Diagramm, das aus den Dimensionen der Flügelzellenpumpe errechnet ist, wie es in Figur 5 gezeigt ist. Dort ist das Kammervolumen gegen die Stellung eines Flügels 3 aufgetragen. Dabei entspricht der Referenzwert 0° der Flügelstellung, bei der die Kompression beginnt, falls z.B. die Stellung des Flügels 3a in der Figur 3b. Dreht sich der Rotor um die Pumpenwelle 20 weiter in Richtung weiter A, so verringert sich das Volumen Vₖ entsprechend der Grafik der Figur 5. Aus der Winkelstellung α lässt sich also das Volumen der jeweiligen Flügelzelle bestimmen. Aus dem Druckwert, bei welchem der Ausgleichszylinder 16 öffnet und dem Wert, um den sich das Volumen der in Rede stehenden Flügelzelle 8c bis zu diesem Zeitpunkt verringert hat, lässt sich die Kompressionsfähigkeit des Wurstbräts bestimmen. Aus der Kompressionsfähigkeit lässt sich dann der Luftinhalt bestimmen, der ursprünglich in dem Wurstbrät vorhanden war.

Andererseits lässt sich aus der Fördermenge, die bis zu einem Zeitpunkt transportiert worden ist, bei welchem der Ausgleichszylinder 16 anspricht, auch direkt der Luftanteil des ursprünglichen Wurstbräts bestimmen. Dazu wird im Vorhinein mit bekannten Parametern eine Eichkurve aufgenommen, wie sie z.B. in Figur 6 gezeigt ist. Hier bezeichnet V_{F} die Fördermenge an Wurstbrät, die transportiert worden ist, bis der Ausgleichskolben 16 bei einem Wert von z.B. 9 bar angesprochen hat. Mit Hilfe des Diagramms der Figur 6, das im Vorhinein mit Wurstbrät bekannten Luftanteiles aufgenommen worden ist, kann dann der prozentuale Luftanteil des zu komprimierenden Wurstbrätmaterials direkt abgelesen werden.

Eine solche Kurve kann auch der Steuerung 26 vorgegeben werden. In diesem Fall bestimmt die Steuerung 26 aus der Flügelstellung, bei der der Ausgleichskolben 16 öffnet, das bis zu diesem Zeitpunkt geförderte Volumen V_{F} und gibt mit Hilfe der Relation der Figur 6 den prozentualen Luftanteil an.

Die Steuerung 26 zeichnet den Luftinhalt kontinuierlich auf. Beim Über- bzw. Unterschreiten von vorbestimmten Grenzwerten wird ein Warnsignal abgegeben, so dass das Bedienungspersonal die Ursache des erhöhten bzw. erniedrigten Luftinhaltes des Wurstbrätes feststellen kann.

Mit der erfindungsgemäßen Fördereinrichtung ist auch eine Erhöhung der Sicherheit verbunden. Ist z.B. der Zufluss von Wurstbrät durch den Einfülltrichter 19 und den Einlass 9 ungleichmäßig oder unterbrochen, so lässt sich das in einem unterschiedlichen angezeigten Luftinhalt manifestieren, der wiederum direkt von der Steuerung 26 auf die genannte Weise nachgewiesen und ggf. zu einer Warnung benutzt werden kann.

Nachdem, wie in Figur 3c gezeigt, ein ausreichender Druckausgleich stattgefunden hat, schließt der Ausgleichskolben 16 wieder und die Flügelzelle 8c tritt in den Dosiersektor 12 ein, in dem sich der Abstand der Innenkontur 18 des Pumpengehäuses 1 von der Pumpenwelle 20 nicht ändert. Auf diese Weise wird erreicht, dass das Wurstbrät gleichmäßig in der Flügelzelle 8c verteilt wird. Schließlich wird, wie es in Figur 3e angedeutet ist, die Flügelzelle 8c in den Auslass 10 entleert. Das so definiert portionierte Wurstbrät dient dann zur Weiterverarbeitung z.B. dem Abfüllen in eine Wurst.

Figur 4 zeigt eine vereinfachte Abwandlung, bei welcher kein Ausgleichskolben 16 vorgesehen ist.

Stattdessen ist ein Überdrucksensor 31 vorgesehen, der bei einem voreingestellten Wert ein Signal über die Signalleitung 30 an die Steuerung 26 abgibt. Aus dem Zeitpunkt dieses Signales kann in der gleichen Weise, wie oben beschrieben, die Druckänderung bzw. der Luftinhalt des Wurstbrätes bestimmt werden.

Der Überdrucksensor 31 kann auch durch einen kontinuierlich messenden Drucksensor ersetzt werden, der die Druckänderung kontinuierlich aufzeichnet. Aus der so nachgewiesenen Druckänderung kann mit Hilfe der Volumenänderung die Kompressibilität des Wurstbräts bestimmt werden und auch so auf den Luftinhalt geschlossen werden.

Ebenso kann ein Ausgleichszylinder 16 und ein zusätzlicher Drucksensor 31 gleichzeitig zum Einsatz kommen.

Mit der erfindungsgemäßen Fördervorrichtung ist eine ständige Qualitätsüberwachung der Produkte bezüglich des Luftinhaltes möglich. Im Speziellen bei der Wurstherstellung ist dies von Vorteil, da der Luftinhalt entscheidend für die Haltbarkeit, das Schnittbild und den Biss des Endproduktes ist. Der Luftinhalt kann entweder kontinuierlich aufgezeichnet werden, oder bei entsprechender Über- oder Unterschreitung von Grenzwerten zu einem Warnsignal führen. Es kann dann z.B. vom Bedienungspersonal festgestellt werden, ob das Nichteinhalten der Grenzwerte auf eine Fehlfunktion der Fördervorrichtung oder auf eine möglicherweise unerwünschte Änderung der Eiogenschaften des zugeführten Wurstbrätmaterials zurückzuführen ist.

## Patentansprüche

1. Fördervorrichtung für pastöse Massen, insbesondere von Wurstbrät, mit wenigstens einer volumenveränderlichen Kammer (8, 8c) zur Komprimierung der pastösen Masse und mit einem Einlass (9) und einem Auslass (10) für die pastöse Masse,
**gekennzeichnet durch**
eine Einrichtung (16, 31, 32) zur Erfassung des Druckes in der zu komprimierenden pastösen Masse in der volumenveränderlichen Kammer (8, 8c) und
eine Einrichtung (22, 24) zur Erfassung der Volumenänderung der volumenveränderlichen Kammer (8, 8c).

2. Fördervorrichtung nach Anspruch 1,
**gekennzeichnet durch**
eine Flügelzellenpumpe zur Beförderung der pastösen Masse mit einem Pumpengehäuse (1) und einem darin angeordneten, in Drehung versetzbaren Rotor mit in diesem radial verschiebbaren Flügeln (3), die mit der Wandung des Pumpengehäuses (18), dem Boden (5) und dem Deckel (6) des Gehäuses (1) und der Außenfläche (2) des Rotors Flügelzellen (8, 8c) bilden.

3. Fördervorrichtung nach Anspruch 2,
**dadurch gekennzeichnet, dass**
die wenigstens eine volumenveränderliche Kammer (8c) durch eine Flügelzelle gebildet wird, die sich in einer Kompressionszone (11) der Flügelzellenpumpe befindet, in welcher eine Wandung (18) des Pumpengehäuses einen nicht konstanten Abstand von der Rotorachse (20) aulweist, so dass sich bei Drehung des Rotors die Flügelzelle (8c) in der Kompressionszone (11) volumenverändert.

4. Fördervorrichtung nach Anspruch 3,
**dadurch gekennzeichnet, dass**
die Einrichtung (22, 24) zur Erfassung der Volumenveränderung ein Mittel zur Bestimmung der Stellung eines Flügels der jeweils sich in der Kompressionszone (11) befindlichen Flügelzelle (8c) umfasst.

5. Fördervorrichtung nach Anspruch 1,
**gekennzeichnet durch**
eine Hubkolbeneinrichtung zur Beförderung der pastösen Masse.

6. Fördervorrichtung nach Anspruch 5,
**dadurch gekennzeichnet, dass**
die wenigstens eine volumenveränderliche Kammer eine Hubkolbenkammer der Hubkolbeneinrichtung umfasst, deren Volumen durch Verschiebung des Kolbens verändert wird.

7. Fördervorrichtung nach Anspruch 6,
**dadurch gekennzeichnet, dass**
die Einrichtung zur Erfassung der Volumenänderung ein Mittel zur Erfassung der Kolbenstellung umfasst.

8. Fördervorrichtung nach einem der vorhergehenden Ansprüche,
**dadurch gekennzeichnet, dass**
die Einrichtung zur Erfassung des Druckes in der zu komprimierenden Masse einen Drucksensor (31) umfasst.

9. Fördervorrichtung nach einem der vorhergehenden Ansprüche,
**dadurch gekennzeichnet, dass**
die Einrichtung zur Erfassung des Druckes einen Überdrucksensor (16, 31), der bei einem vorgegebenen Druck in der volumenveränderlichen Kammer (8c) anspricht, umfasst.

10. Fördervorrichtung nach Anspruch 9,
**dadurch gekennzeichnet, dass**
als Überdrucksensor ein Ausgleichszylinder, in dem ein federbeaufschlagter Ausgleichskolben (16) gelagert ist, vorgesehen ist.

11. Fördervorrichtung nach einem der Ansprüche 9 oder 10,
**dadurch gekennzeichnet, dass**
der Überdrucksensor (16) ein Überdruckventil umfaßt.

12. Fördervorrichtung nach Anspruch 11,
**dadurch gekennzeichnet, dass**
das Überdruckventil (16) beim Öffnen das Innere des Pumpengehäuses über einen Rückstromkanal (34) mit dem Einlass (9) für die pastöse Masse verbindet.

13. Fördervorrichtung nach einem der vorhergehenden Ansprüche,
**gekennzeichnet durch**
Mittel (26) zur Bestimmung des Luftinhaltes der pastösen Masse aus der Änderung des Volumens und des Druckes in der volumenveränderlichen Kammer (8c).

14. Fördervorrichtung nach Anspruch 13 und wenigstens einem der Ansprüche 9 bis 12,
**dadurch gekennzeichnet, dass**
die Mittel (26) zur Bestimmung des Luftinhaltes derart ausgestaltet sind, dass sie das Volumen der volumenveränderlichen Kammer (8c) zu einem Zeitpunkt bestimmen, an dem der Überdrucksensor (16, 31) anspricht.

15. Verfahren zur Bestimmung des Luftinhaltes einer pastösen Masse, insbesondere von Wurstbrät, in einer Fördervorrichtung für diese pastöse Masse, die eine Kompressionszone (11) umfasst, wobei der Druck und die Volumenänderung in der Kompressionszone (11) erfasst werden und daraus der Luftinhalt bestimmt wird.

16. Verfahren nach Anspruch 15,
**dadurch gekennzeichnet, dass**
als Fördervorrichtung eine Flügelzellenpumpe mit einer Kompressionszone (11) eingesetzt wird und die Volumenänderung einer Kammer der Flügelzellenpumpe in der Kompressionszone (11) aus der Veränderung der Stellung der Flügel der Flügelzellenpumpe bestimmt wird.

17. Verfahren nach Anspruch 15,
**dadurch gekennzeichnet, dass**
als Fördervorrichtung eine Hubkolbenpumpe eingesetzt wird und die Volumenänderung aus der Kolbenstellung bestimmt wird.

18. Verfahren nach einem der Ansprüche 15 bis 17,
**dadurch gekennzeichnet, dass**
der Druck mit einem Drucksensor (31) bestimmt wird.

19. Verfahren nach einem der Ansprüche 15 bis 17,
**dadurch gekennzeichnet, dass**
das Volumen der pastösen Masse zu einem Zeitpunkt bestimmt wird, an welchem ein Überdrucksensor (16, 31) anspricht, der bei einem vorbestimmten Druckwert anspricht und mit der Kompressionszone (11) in Verbindung ist,
aus dem so bestimmten Volumen und dem bekannten Normaldruckvolumen die Volumenänderung der pastösen Masse bestimmt wird und
aus dem vorbestimmten Druckwert und der Volumenänderung der ursprüngliche Luftinhalt der pastösen Masse bestimmt wird.

20. Verfahren nach Anspruch 19,
**dadurch gekennzeichnet, dass**
als Überdrucksensor ein Überdruckventil (16) eingesetzt wird.

## Claims

1. Delivery apparatus for pasty substances, in particular sausagemeat, with at least one chamber (8, 8c) of variable volume for compressing the pasty substance and with an inlet (9) and an outlet (10) for the pasty substance, **characterised by** a device (16, 31, 32) for detecting the pressure in the pasty substance to be compressed in the chamber (8, 8c) of variable volume and a device (22, 24) for detecting the change of volume of the chamber (8, 8c) of variable volume.

2. Delivery apparatus according to claim 1, **characterised by** a vane-cell pump for conveying the pasty substance with a pump housing (1) and, arranged therein, a rotor which can be set in rotation with vanes (3) which are radially displaceable therein and which, with the wall of the pump housing (18), the bottom (5) and the cover (6) of the housing (1) and the outer surface (2) of the rotor, form vane cells (8, 8c).

3. Delivery apparatus according to claim 2, **characterised in that** the at least one chamber (8c) of variable volume is formed by a vane cell which is located in a compression zone (11) of the vane-cell pump, in which a wall (18) of the pump housing is at a non-constant distance from the rotor shaft (20) so that, upon rotation of the rotor, the vane cell (8c) in the compression zone (11) changes volume.

4. Delivery apparatus according to claim 3, **characterised in that** the device (22, 24) for detecting the change of volume includes a means for determining the position of a vane of the vane cell (8c) located in the compression zone (11) at any given time.

5. Delivery apparatus according to claim 1, **characterised by** a reciprocating piston device for conveying the pasty substance.

6. Delivery apparatus according to claim 5, **characterised in that** the at least one chamber of variable volume includes a reciprocating-piston chamber of the reciprocating piston device, the volume of which is varied by displacement of the piston.

7. Delivery apparatus according to claim 6, **characterised in that** the device for detecting the change of volume includes a means for detecting the piston position.

8. Delivery apparatus according to any of the preceding claims, **characterised in that** the device for detecting the pressure in the substance to be compressed includes a pressure sensor (31).

9. Delivery apparatus according to any of the preceding claims, **characterised in that** the device for detecting the pressure includes an excess pressure sensor (16, 31) which responds at a predetermined pressure in the chamber (8c) of variable volume.

10. Delivery apparatus according to claim 9, **characterised in that** an equalising cylinder in which is mounted a spring-loaded equalising piston (16) is provided as the excess pressure sensor.

11. Delivery apparatus according to either of claims 9 or 10, **characterised in that** the excess pressure sensor (16) includes a pressure relief valve.

12. Delivery apparatus according to claim 11, **characterised in that**, upon opening, the pressure relief valve (16) connects the interior of the pump housing via a return channel (34) to the inlet (9) for the pasty substance.

13. Delivery apparatus according to any of the preceding claims, **characterised by** means (26) for determining the air content of the pasty substance from the change of volume and the pressure in the chamber (8c) of variable volume.

14. Delivery apparatus according to claim 13 and one or more of claims 9 to 12, **characterised in that** the means (26) for determining the air content are designed in such a way that they determine the volume of the chamber (8c) of variable volume at a moment at which the excess pressure sensor (16, 31) responds.

15. Method for determining the air content of a pasty substance, in particular sausagemeat, in a delivery apparatus for this pasty substance which includes a compression zone (11), wherein the pressure and the change of volume in the compression zone (11) are detected and the air content is determined therefrom.

16. Method according to claim 15, **characterised in that** a vane-cell pump with a compression zone (11) is used as the delivery apparatus and the change of volume of a chamber of the vane-cell pump in the compression zone (11) is determined from the change of position of the vanes of the vane-cell pump.

17. Method according to claim 15, **characterised in that** a reciprocating-piston pump is used as the delivery apparatus and the change of volume is determined from the piston position.

18. Method according to any of claims 15 to 17, **characterised in that** the pressure is determined with a pressure sensor (31).

19. Method according to any of claims 15 to 17, **characterised in that** the volume of the pasty substance is determined at a moment at which an excess pressure sensor (16, 31) responds, which responds at a predetermined pressure value and is connected to the compression zone (11), the change of volume of the pasty substance is determined from the volume determined in this way and from the known normal-pressure volume, and the original air content of the pasty substance is determined from the predetermined pressure value and from the change of volume.

20. Method according to claim 19, **characterised in that** a pressure relief valve (16) is used as the excess pressure sensor.

## Revendications

1. Dispositif de transport pour matières pâteuses, en particulier de la chair à saucisses, comprenant au moins un compartiment à volume variable (8, 8c) pour la compression de la matière pâteuse, et une admission (9) et une décharge (10) pour la matière pâteuse, **caractérisé par** un dispositif (16, 31, 32) pour détecter la pression dans la matière pâteuse à comprimer dans le compartiment à volume variable (8, 8c), et par un dispositif (22, 24) pour détecter la variation de volume du compartiment à volume variable (8, 8c).

2. Dispositif de transport suivant la revendication 1, **caractérisé par** une pompe multicellulaire pour le transport de la matière pâteuse avec un corps de pompe (1) et un rotor mobile en rotation dans ce dernier avec des palettes (3) pouvant être déplacées dans le sens radial, ces palettes formant des cellules (8, 8c) avec la paroi du corps de pompe (18), le fond (5) et le couvercle (6) du corps (1) et la surface extérieure (2) du rotor.

3. Dispositif de transport suivant la revendication 2, **caractérisé en ce que** le compartiment à volume variable (8c), au moins, est formé par une cellule, qui se situe dans une zone de compression (11) de la pompe multicellulaire, dans laquelle une paroi (18) du corps de pompe présente une distance non constante par rapport à l'axe (20) du rotor, de sorte que la cellule (8c) varie en volume dans la zone de compression (11) lors de la rotation du rotor.

4. Dispositif de transport suivant la revendication 3, **caractérisé en ce que** le dispositif (22, 24) pour détecter la variation de volume comprend un moyen pour déterminer la position d'une palette de la cellule (8c) respectivement située dans la zone de compression (11).

5. Dispositif de transport suivant la revendication 1, **caractérisé par** un dispositif à piston alternatif pour le transport de la matière pâteuse.

6. Dispositif de transport suivant la revendication 5, **caractérisé en ce que** le compartiment à volume variable, au moins, comprend un compartiment de piston alternatif du dispositif à piston alternatif, dont le volume est modifié par le mouvement du piston.

7. Dispositif de transport suivant la revendication 6, **caractérisé en ce que** le dispositif pour détecter la variation de volume comprend un moyen pour détecter la position du piston.

8. Dispositif de transport suivant l'une des revendications précédentes, **caractérisé en ce que** le dispositif pour détecter la pression dans la matière à comprimer comprend un capteur de pression (31).

9. Dispositif de transport suivant l'une des revendications précédentes, **caractérisé en ce que** le dispositif pour détecter la pression comprend un capteur de surpression (16, 31), qui répond pour une pression prédéfinie dans le compartiment (8c) à volume variable.

10. Dispositif de transport suivant la revendication 9, **caractérisé en ce qu'**un cylindre d'équilibrage, dans lequel est monté un piston d'équilibrage (16) chargé par ressort, est prévu comme capteur de surpression.

11. Dispositif de transport suivant l'une des revendications 9 et 10, **caractérisé en ce que** le capteur de surpression (16) comprend une soupape de sûreté.

12. Dispositif de transport suivant la revendication 11, **caractérisé en ce que** la soupape de sûreté (16), lors de l'ouverture, relie l'intérieur du corps de pompe à l'admission (9) pour la matière pâteuse par l'intermédiaire d'un conduit de retour (34).

13. Dispositif de transport suivant l'une des revendications précédentes, **caractérisé par** des moyens (26) pour déterminer la teneur en air de la matière pâteuse à partir de la variation du volume et de la pression dans le compartiment (8c) à volume variable.

14. Dispositif de transport suivant la revendication 13 et au moins l'une des revendications 9 à 12, **caractérisé en ce que** les moyens (26) pour déterminer la teneur en air ont une configuration telle qu'ils déterminent le volume du compartiment (8c) à volume variable à un instant auquel répond le capteur de surpression (16, 31).

15. Procédé pour déterminer la teneur en air d'une matière pâteuse, en particulier de chair à saucisses, dans un dispositif de transport pour cette matière pâteuse, qui comprend une zone de compression (11), la pression et la variation de volume étant détectées dans la zone de compression (11), et la teneur en air étant déterminée à partir de ces valeurs.

16. Procédé suivant la revendication 15, **caractérisé en ce qu'**une pompe multicellulaire avec une zone de compression (11) est utilisée comme dispositif de transport, et la variation de volume d'un compartiment de la pompe multicellulaire dans la zone de compression (11) est déterminée à partir de la variation de position des palettes de la pompe multicellulaire.

17. Procédé suivant la revendication 15, **caractérisé en ce qu'**une pompe à piston alternatif est utilisée comme dispositif de transport, et la variation de volume est déterminée à partir de la position du piston.

18. Procédé suivant l'une des revendications 15 à 17, **caractérisé en ce que** la pression est déterminée par un capteur de pression (31).

19. Procédé suivant l'une des revendications 15 à 17, **caractérisé en ce que** le volume de la matière pâteuse est déterminé à un instant auquel répond un capteur de surpression (16, 31), qui répond pour une valeur de pression prédéfinie et est en liaison avec la zone de compression (11), la variation de volume de la matière pâteuse est déterminée à partir du volume ainsi défini et du volume à pression normale connu, et la teneur en air initiale de la matière pâteuse est déterminée à partir de la valeur de pression prédéfinie et de la variation de volume.

20. Procédé suivant la revendication 19, **caractérisé en ce qu'**une soupape de sûreté (16) est utilisée comme capteur de surpression.
